# EUROPÄISCHE PATENTSCHRIFT

(11) **EP 3 974 348 B1**
(45) Veröffentlichungstag und Bekanntmachung des Hinweises auf die Patenterteilung: **17.07.2024**
(21) Anmeldenummer: 20198272.5
(22) Anmeldetag: 25.09.2020
(51) Int. Cl.: B65G 1/04, B65G 1/137

(54) **INTRALOGISTIKSYSTEM**
INTRA-LOGISTIC SYSTEM
SYSTÈME INTRA-LOGISTIQUE

(43) Veröffentlichungstag der Anmeldung: 30.03.2022
(73) Patentinhaber: Swisslog AG, 5033 Buchs (CH)
(72) Erfinder: KATZINGER, Martin, 4664 Laakirchen (AT); WEBER, Jörg, 44359 Dortmund (DE)
(74) Vertreter: Böss, Dieter Alexander

(56) Entgegenhaltungen:
- EP-A1- 2 657 156
- EP-A2- 2 361 855
- WO-A1-2016/033628
- WO-A1-2016/199033
- CN-A- 108 820 663
- CN-A- 109 383 967
- JP-A- 2005 314 077
- US-A1- 2016 355 337
- US-A1- 2020 290 803

## Beschreibung

Die Erfindung betrifft ein Intralogistiksystem, aufweisend wenigstens ein autonomes Transportfahrzeug, wenigstens ein vom autonomen Transportfahrzeug verschiedenes Satellitenfahrzeug, und wenigstens ein Regal mit Lagerplätzen in mehreren Ebenen und mit mindestens einem Schacht, der ausgebildet ist zum vertikalen Fahren des Satellitenfahrzeugs in dem Schacht, derart, dass das Satellitenfahrzeug zwischen den Ebenen des Regals automatisch wechseln kann.

Die WO 2018/189110 A1 beschreibt ein Kommissioniersystem, aufweisend zwei Paare von Pfosten, die jeweils an zwei getrennten Regalen befestigt sind, die einen Umlaufgang begrenzen, sowie einen automatisch geführten Wagen mit mindestens zwei Rädern, wobei der Wagen zum Aufnehmen von Gegenständen aus mindestens einem der Regale bestimmt ist. Der Wagen umfasst einen Hubantrieb, der mit den Pfosten zusammenwirkt, so dass der Wagen entlang der Pfosten nach oben fahren kann. Eine Steigeinrichtung des Hubantriebs umfasst vier Kettenräder, die jeweils mit einem der vier Pfosten zusammenwirken. Die Kettenräder sind jeweils relativ zum Fahrgestell des Wagens zwischen zwei Positionen beweglich und zwar einer beabstandeten Position, in der mindestens ein Teil des auf dem Träger montierten Kettenrads seitlich von dem Fahrgestell herausragt, und einer eingefahrenen Position, in der sich das jeweilige Kettenrad innerhalb der Kontur des Fahrgestells befindet.

Die WO 2016/199033 A1 beschreibt ein Intralogistiksystem gemäß dem Oberbegriff des Anspruchs 1, das mehrere übereinander angeordnete Regaleinheiten über einem horizontalen Boden umfasst, wobei jede Regaleinheit eine vertikale Anordnung von Regalen enthält, auf denen Behälter platziert werden können. Das Intralogistiksystem umfasst außerdem einen oder mehrere Bodenroboter, die so konfiguriert sind, dass sie sich zwischen den Regaleinheiten entlang erster Pfade auf dem Boden bewegen, und umfasst einen oder mehrere Heberoboter, die so konfiguriert sind, dass sie sich unabhängig von den Bodenrobotern entlang zweiter Pfade in einer vertikalen Ebene über vertikale Flächen der Regaleinheiten bewegen können und die Behälter zwischen den Regalen und den Bodenrobotern transferieren können. Die Heberoboter sind so konfiguriert, dass sie sich selbstständig von den vertikalen Flächen der Regaleinheiten lösen und auf die Bodenroboter wechseln können, so dass die Bodenroboter den jeweiligen Hubroboter von einer vertikalen Ebene zu einer anderen vertikalen Ebene zwischen den Regaleinheiten transportieren kann, woraufhin der Hubroboter wieder mit den vertikalen Flächen der Regaleinheiten in Eingriff kommen kann.

Aufgabe der Erfindung ist es, ein Intralogistiksystem mit wenigstens einem autonomen Transportfahrzeug und wenigstens einem vom autonomen Transportfahrzeug verschiedenen Satellitenfahrzeug zu schaffen, bei dem das wenigstens eine autonome Transportfahrzeug und das wenigstens eine Satellitenfahrzeug besonders effektiv und energiesparend eingesetzt werden können.

Die Aufgabe wird erfindungsgemäß gelöst durch ein Intralogistiksystem, aufweisend wenigstens ein autonomes Transportfahrzeug, wenigstens ein vom autonomen Transportfahrzeug verschiedenes Satellitenfahrzeug, und wenigstens ein Regal mit Lagerplätzen in mehreren Ebenen, wobei dass das wenigstens eine Regal eine von den Ebenen der Lagerplätze getrennte Fahrebene für das wenigstens eine autonome Transportfahrzeug aufweist, und mit mindestens einem Schacht, der ausgebildet ist zum vertikalen Fahren des Satellitenfahrzeugs in dem Schacht, derart, dass das Satellitenfahrzeug zwischen den Ebenen des Regals automatisch wechseln kann, wobei das autonome Transportfahrzeug eine Aufnahmeeinrichtung aufweist, die ausgebildet ist, das Satellitenfahrzeug lösbar aufzunehmen, so dass in einem aufgenommenen Zustand das Satellitenfahrzeug mit dem autonomen Transportfahrzeug verbunden ist und eine fahrbare Einheit bildet, derart, dass das Satellitenfahrzeug durch Fahren des autonomen Transportfahrzeugs mitbewegt wird, und in einem gelösten Zustand das Satellitenfahrzeug von dem autonomen Transportfahrzeug getrennt ist und unabhängig von dem autonomen Transportfahrzeug eigenständig fahrbar ist, wobei das wenigstens eine Regal eine von den Ebenen der Lagerplätze und/oder von der Fahrebene für das wenigstens eine autonome Transportfahrzeug getrennte Wartungsebene aufweist, die durch Sicherheitseinrichtungen abgesichert ist, derart, dass Personen am Verlassen der Wartungsebene in den mindestens einen Schacht des Regals und/oder in die Fahrebene des Regals gehindert sind, und das wenigstens eine Regal eine von den Ebenen der Lagerplätze, von der Fahrebene für das wenigstens eine autonome Transportfahrzeug und/oder von der Wartungsebene getrennte Serviceebene aufweist, die mit einer Fahrebene über eine Fahrbahn verbunden ist, über welche das wenigstens eine autonome Transportfahrzeug selbstfahrend zwischen der Serviceebene und der Fahrebene wechseln kann, wobei die Fahrbahn von einer die Serviceebene mit der Fahrebene des Regals verbindenden, befahrbaren Rampe gebildet wird.

Die Erfindung befasst sich mit einem Intralogistiksystem, d.h. einer Zusammenstellung mehrerer Komponenten innerhalb eines Betriebsgeländes, die zusammenwirken, um Material- und/oder Warenflüsse innerhalb des Betriebsgeländes auszuführen. Das Intralogistiksystem kann beispielsweise im Rahmen der Lagerhaltung, des Versandhandels und/oder eines Verteilzentrums eingesetzt werden. Das Intralogistiksystem umfasst demgemäß zumindest ein Regal, in dem Material, Waren oder sonstige Stückgüter gelagert sind, sowie wenigstens ein Satellitenfahrzeug zum Holen der Materialien, Waren oder sonstige Stückgüter aus dem Regal bzw. zum Bringen der Materialien, Waren oder sonstige Stückgüter in das Regal, und wenigstens ein autonomes Transportfahrzeug zum Fahren des wenigstens einen Satellitenfahrzeugs von einem Einsatzort zu einem anderen Einsatzort des Satellitenfahrzeugs innerhalb des Intralogistiksystems bzw. innerhalb des Betriebsgeländes.

Das autonome Transportfahrzeug kann ein Fahrwerk aufweisen mit mehreren Rädern, insbesondere angetriebenen Rädern, die ausgebildet sind zum selbständigen d.h. fahrerlosen, automatisierten Fahren des autonomen Transportfahrzeugs auf einer Fahrbahn innerhalb des Intralogistiksystems bzw. innerhalb des Betriebsgeländes. Das autonome Transportfahrzeug kann sowohl angetriebene Räder, als auch unangetriebene Räder umfassen. Die angetriebenen Räder können von einer Fahrsteuerung automatisch angesteuert sein. Die Räder können lenkbare Räder sein oder omnidirektionale bzw. holonome Radanordnungen bilden.

Das Satellitenfahrzeug ist als eine vom autonomen Transportfahrzeug getrennt ausgebildet Einheit, die auch ohne eine mechanische Verbindung zu einem autonome Transportfahrzeug funktionsfähig ist. Das Satellitenfahrzeug dient zumindest vorrangig oder ausschließlich zum Transport der Materialien, Waren oder sonstigen Stückgüter innerhalb des Regals. Hingegen dient das autonome Transportfahrzeug zumindest vorrangig oder ausschließlich zum Transport der Materialien, Waren oder sonstigen Stückgüter und des Satellitenfahrzeugs außerhalb des Regals, jedoch innerhalb des Intralogistiksystems. Das Intralogistiksystem weist wenigstens ein autonomes Transportfahrzeug auf, d.h. das Intralogistiksystem kann ein, zwei oder mehrere autonome Transportfahrzeuge umfassen. Das Intralogistiksystem weist wenigstens ein Satellitenfahrzeug auf, d.h. das Intralogistiksystem kann ein, zwei oder mehrere Satellitenfahrzeuge umfassen. Einem einzelnen autonomen Transportfahrzeug können mehrere einzelne Satellitenfahrzeuge zugeordnet sein, d.h. ein einzelnes autonomes Transportfahrzeug kann ausgebildet und steuerungstechnisch eingerichtet sein, wahlweise eines von mehreren Satellitenfahrzeugen aufzunehmen und automatisch von einem Ort zu einem anderen Ort zu fahren. Jedes einzelne Satellitenfahrzeug kann ausgebildet und steuerungstechnisch eingerichtet sein, wahlweise durch eines von mehreren autonomen Transportfahrzeugen bewegt d.h. von einem Ort zu einem anderen Ort gefahren zu werden. Die jeweilige Zuordnung eines bestimmten Satellitenfahrzeugs zu einem bestimmten autonomen Transportfahrzeug kann fest d.h. unveränderlich eingerichtet sein, oder die Zuordnung kann flexibel d.h. veränderlich sein.

Das Regal kann beispielsweise ein in der Intralogistik als solches bekannte Hochregallager sein. Das Regal kann auch ganz allgemein als ein Lagersystem bezeichnet werden. Das Lagersystem dient zum Lagern von Materialien, Waren oder sonstigen Stückgütern. Das Regal bzw. das Lagersystem umfasst mehrere Ebenen, in denen jeweils mehrere Lagerplätze für die Materialien, Waren oder sonstigen Stückgüter ausgebildet sind. Die verschiedenen Ebenen liegen auf unterschiedlichen Höhenlagen und sind über wenigstens einen Schacht mit einander verbunden, derart, dass ein Satellitenfahrzeug über den Schacht von einer Ebene in einen andere Ebene wechseln kann. Der wenigstens eine Schacht kann insbesondere vertikal ausgerichtet sein, so dass das Satellitenfahrzeug mittels des Schachtes von einer Ebene einer ersten Höhenlage in eine Ebene einer anderen zweiten Höhenlage aufsteigen bzw. absteigen kann. Durch ein solches vertikales Fahren des Satellitenfahrzeugs in dem Schacht, kann das Satellitenfahrzeug zwischen den Ebenen des Regals automatisch wechseln. Statt eines einzigen Schachtes können zwei oder mehr Schächte vorgesehen sein. Innerhalb eines Schachtes kann ein einziges Satellitenfahrzeug verfahrbar sein. In einer speziellen Variante können innerhalb eines Schachtes aber gegebenenfalls auch mehrere Satellitenfahrzeuge gleichzeitig verfahrbar sein.

Wenigstens eines der autonomen Transportfahrzeuge weist erfindungsgemäß eine Aufnahmeeinrichtung auf. Die Aufnahmeeinrichtung ist dazu ausgebildet, dass ein Satellitenfahrzeug, insbesondere ein beliebiges von mehreren Satellitenfahrzeugen auf das autonome Transportfahrzeug angedockt werden kann, d.h. aufgeladen bzw. huckepack genommen werden kann. In einem an der Aufnahmeeinrichtung aufgenommenen Zustand des Satellitenfahrzeugs kann das Satellitenfahrzeug bewegt werden, indem es von dem autonomen Transportfahrzeug von einem Ort zu einem anderen Ort gefahren wird. Im aufgenommenen Zustand des Satellitenfahrzeugs wird das Satellitenfahrzeug vollständig von dem autonomen Transportfahrzeug getragen. Das Satellitenfahrzeug ist dann von dem autonomen Transportfahrzeug sozusagen huckepack getragen.

Insofern benötigt das jeweilige Satellitenfahrzeug kein eigenes Fahrwerk und keine eigenen Räder, um auf einer Fahrbahn außerhalb des Regals sich fortbewegen zu können. Andererseits benötigt das autonome Transportfahrzeug keine Hubantriebsvorrichtung und muss demgemäß nicht innerhalb des Regals in der Höhe verfahrbar sein.

Indem das autonome Transportfahrzeug eine Aufnahmeeinrichtung aufweist, die ausgebildet ist, das Satellitenfahrzeug lösbar aufzunehmen, so dass in einem aufgenommenen Zustand das Satellitenfahrzeug mit dem autonomen Transportfahrzeug verbunden ist und eine fahrbare Einheit bildet, derart, dass das Satellitenfahrzeug durch Fahren des autonomen Transportfahrzeugs mitbewegt wird, und in einem gelösten Zustand das Satellitenfahrzeug von dem autonomen Transportfahrzeug getrennt ist und unabhängig von dem autonomen Transportfahrzeug eigenständig in dem Schacht des Regals fahrbar ist, kann ein Intralogistiksystem mit wenigstens einem autonomen Transportfahrzeug und wenigstens einem vom autonomen Transportfahrzeug verschiedenen Satellitenfahrzeug geschaffen werden, bei dem das wenigstens eine autonome Transportfahrzeug und das wenigstens eine Satellitenfahrzeug besonders effektiv und energiesparend eingesetzt werden können.

Durch die Trennung der Fahrbewegung auf einer Fahrbahn außerhalb des Regals allein durch das autonome Transportfahrzeug und der Fahrbewegung innerhalb des Regals bzw. zwischen zwei Regalen, insbesondere in dem Schacht des Regals, allein durch das Satellitenfahrzeug, entfällt ein energetisch aufwändiges Heben des gesamten autonomen Transportfahrzeugs in dem jeweiligen Schacht des Regals. Anders ausgedrückt, genügt erfindungsgemäß ein Aufsteigen und Absteigen des vom autonomen Transportfahrzeug getrennten Satellitenfahrzeugs innerhalb des Regals, insbesondere in dem Schacht, wobei das abgetrennte autonome Transportfahrzeug an seinem ursprünglichen Standort verbleibt kann, ohne angehoben zu werden, bzw. während des Aufsteigens und Absteigens des abgetrennten Satellitenfahrzeugs eine andere Transportaufgabe durchführen kann, bspw. das Transportieren eines anderen Satellitenfahrzeugs.

Durch die Trennung der Funktionen "Fahren" mit dem autonomen Transportfahrzeug und "Heben/Senken" mit dem Satellitenfahrzeug können die Anzahl der autonomen Transportfahrzeuge und die Anzahl der Satellitenfahrzeuge innerhalb eines Gesamtsystems unabhängig voneinander bestimmt werden, so dass das Gesamtsystem optimal an die jeweiligen Anforderungen angepasst werden kann. Ein weiterer Vorteil ist die mögliche Redundanz, da ein individuelles Satellitenfahrzeug der mehreren Satellitenfahrzeuge einem bestimmten autonomen Transportfahrzeug der mehreren autonomen Transportfahrzeuge variabel zugeordnet werden können.

Die Aufnahmeeinrichtung bildet eine Kopplungsvorrichtung, mittels der ein Satellitenfahrzeug wahlweise an ein autonomes Transportfahrzeug angekoppelt werden kann oder von einem autonomen Transportfahrzeug abgekoppelt werden kann. Verschiedene autonomen Transportfahrzeug und verschiedene Satellitenfahrzeuge können demgemäß beliebig kombiniert betrieben werden.

Das wenigstens eine autonome Transportfahrzeug kann Haltemittel aufweisen und das Satellitenfahrzeug kann dabei zu den Haltemitteln des autonomen Transportfahrzeug komplementäre Gegenhaltemittel aufweisen, wobei die Haltemittel und die Gegenhaltemittel in ihrem Verbindungszustand das Satellitenfahrzeug auf dem autonomen Transportfahrzeug festhalten, und in ihrem Freigabezustand das Satellitenfahrzeug von dem autonomen Transportfahrzeug freigeben. Die Haltemittel des autonomen Transportfahrzeugs sind insofern Teil der Aufnahmeeinrichtung.

Das Haltemittel oder die mehreren Haltemittel des autonomen Transportfahrzeugs können mit dem Gegenhaltemittel oder den mehreren Gegenhaltemitteln des Satellitenfahrzeugs formergänzend ausgebildet sein. Dies bedeutet, dass das Haltemittel oder die mehreren Haltemittel des autonomen Transportfahrzeugs und das Gegenhaltemittel oder die mehreren Gegenhaltemitteln des Satellitenfahrzeugs sich derart ergänzen, dass sie beispielsweise formschlüssig zusammengefügt werden und wieder zerstörungsfrei getrennt werden können. Das Haltemittel oder die mehreren Haltemittel des autonomen Transportfahrzeugs und das Gegenhaltemittel oder die mehreren Gegenhaltemitteln des Satellitenfahrzeugs bilden mechanische Verbindungsmittel die lösbar gestaltet sind. In ihrem Verbindungszustand können das Haltemittel oder die mehreren Haltemittel des autonomen Transportfahrzeugs und das Gegenhaltemittel oder die mehreren Gegenhaltemitteln des Satellitenfahrzeugs durch automatisch betätigungsfähige Verriegelungsmittel gegen unbeabsichtigtes voneinander Lösen gesichert sein. Das Haltemittel oder die mehreren Haltemittel des autonomen Transportfahrzeugs und das Gegenhaltemittel oder die mehreren Gegenhaltemitteln des Satellitenfahrzeugs können beispielsweise Rastleisten, Nuten, Schienen und/oder Rastvorsprünge bzw. Rastrücksprünge umfassen, welche durch eine formschlüssige mechanische Verbindung das jeweilige Satellitenfahrzeug im Verbindungszustand an dem autonomen Transportfahrzeug halten. Das Haltemittel oder die mehreren Haltemittel des autonomen Transportfahrzeugs und das Gegenhaltemittel oder die mehreren Gegenhaltemitteln des Satellitenfahrzeugs können automatisch, insbesondere angesteuert durch eine Konfigurationssteuerung, miteinander verbunden bzw. voneinander gelöst werden. Das Haltemittel oder die mehreren Haltemittel des autonomen Transportfahrzeugs und das Gegenhaltemittel oder die mehreren Gegenhaltemitteln des Satellitenfahrzeugs könne auch von magnetisch wirkenden Magnethaltemitteln und Magnetgegenhaltemitteln gebildet werden.

Das wenigstens eine autonome Transportfahrzeug kann wenigstens einen elektrischen Steckverbinder aufweisen und das Satellitenfahrzeug kann dabei wenigstens einen zu dem elektrischen Steckverbinder des autonomen Transportfahrzeug korrespondierenden elektrischen Gegensteckverbinder aufweisen, wobei der elektrische Steckverbinder und der elektrische Gegensteckverbinder in einem miteinander kontaktierten Zustand das Satellitenfahrzeug elektrisch mit dem autonomen Transportfahrzeug verbinden, so dass elektrische Energie zwischen dem autonomen Transportfahrzeug und dem Satellitenfahrzeug übertragbar ist, und in einem unterbrochenen Zustand das Satellitenfahrzeug elektrisch von dem autonomen Transportfahrzeug getrennt ist. Der wenigstens eine elektrische Steckverbinder des autonomen Transportfahrzeugs kann Teil der Aufnahmeeinrichtung sein.

Der elektrische Steckverbinder kann ein oder mehrere elektrische Kontakte umfassen. Der jeweilige elektrische Kontakt kann als ein nach außen weisender Kontaktstift oder als eine nach innen weisende Kontaktöffnung ausgebildet sein. Der elektrische Steckverbinder kann beispielsweise als ein Stecker, eine Buchse oder eine Kupplung, oder als eine Mischform davon ausgeführt sein.

In analoger Weise kann der elektrische Gegensteckverbinder ein oder mehrere elektrische Kontakte umfassen. Der jeweilige elektrische Kontakt kann als ein nach außen weisender Kontaktstift oder als eine nach innen weisende Kontaktöffnung ausgebildet sein. Der elektrische Gegensteckverbinder kann beispielsweise als ein Stecker, eine Buchse oder eine Kupplung, oder als eine Mischform davon ausgeführt sein.

Der elektrische Steckverbinder und der elektrische Gegensteckverbinder ermöglichen ein Übertragen elektrischer Energie und/oder elektrischer Signale zwischen dem autonomen Transportfahrzeug und dem Satellitenfahrzeug, wenn das Satellitenfahrzeug an das autonome Transportfahrzeug angekoppelt ist. Ein miteinander kontaktierender Zustand des elektrischen Steckverbinders und des elektrischen Gegensteckverbinders kann simultan eintreten, wenn das Satellitenfahrzeug mittels Haltemittel des autonomen Transportfahrzeugs und Gegenhaltemittel des Satellitenfahrzeugs mechanisch an das autonome Transportfahrzeug angekoppelt wird. Alternativ kann ein miteinander kontaktierender Zustand des elektrischen Steckverbinders und des elektrischen Gegensteckverbinders unabhängig von einer mechanischen Koppelung des autonomen Transportfahrzeugs mit dem Satellitenfahrzeug erfolgen. Anders ausgedrückt, kann eine elektrische Schaltvorrichtung vorgesehen sein, welche in einem mechanisch angekoppelten Zustand des Satellitenfahrzeugs an dem autonomen Transportfahrzeug den miteinander kontaktierenden Zustand des elektrischen Steckverbinders und des elektrischen Gegensteckverbinders unabhängig von der mechanische Koppelung herstellt oder einen miteinander kontaktierenden Zustand unterbricht, so dass auch in einem mechanisch angekoppelten Zustand des Satellitenfahrzeugs an dem autonomen Transportfahrzeug eine Übertragung von elektrischer Energie bei Bedarf unterbunden sein kann. Die elektrische Schaltvorrichtung kann automatisch angesteuert sein.

Das wenigstens eine autonome Transportfahrzeug kann, alternativ oder ergänzend zu elektrischen Steckverbindern und elektrischen Gegensteckverbindern, wenigstens ein kontaktlos arbeitendes elektrisches Übertragungsmittel, wie beispielsweise ein induktiv wirkendes Übertragungsmittel aufweisen, wobei das Satellitenfahrzeug dabei wenigstens ein zu dem kontaktlos arbeitenden elektrischen Übertragungsmittel des autonomen Transportfahrzeug korrespondierendes kontaktlos arbeitendes elektrisches Gegenübertragungsmittel aufweisen, , wie beispielsweise ein induktiv wirkendes Gegenübertragungsmittel wobei das kontaktlos arbeitende elektrische Übertragungsmittel und das kontaktlos arbeitende elektrische Gegenübertragungsmittel in einem miteinander induktiv gekoppelten Zustand das Satellitenfahrzeug elektrisch mit dem autonomen Transportfahrzeug verbinden, so dass elektrische Energie zwischen dem autonomen Transportfahrzeug und dem Satellitenfahrzeug übertragbar ist, und in einem unterbrochenen Zustand das Satellitenfahrzeug elektrisch von dem autonomen Transportfahrzeug getrennt ist. Das wenigstens eine kontaktlos arbeitende elektrische Übertragungsmittel des autonomen Transportfahrzeugs kann Teil der Aufnahmeeinrichtung sein.

Eine Datenkommunikation zwischen dem autonomen Transportfahrzeug und dem Satellitenfahrzeug kann auch drahtlos erfolgen, beispielsweise über WLAN oder Bluetooth.

Das autonome Transportfahrzeug kann eine erste Fahrsteuerung aufweisen und das Satellitenfahrzeug kann eine zweite Fahrsteuerung aufweisen, wobei die erste Fahrsteuerung und die zweite Fahrsteuerung eingerichtet sein können, über den elektrischen Steckverbinder und den elektrischen Gegensteckverbinder mittels elektrischer Signale zu kommunizieren, wenn sich der elektrische Steckverbinder und der elektrische Gegensteckverbinder in einem miteinander kontaktierenden Zustand befinden.

Das autonome Transportfahrzeug kann wenigstens einen ersten elektrischen Antrieb und einen den ersten elektrischen Antrieb speisenden ersten elektrischen Energiespeicher aufweisen und das Satellitenfahrzeug kann dabei mindestens einen von dem ersten elektrischen Antrieb des autonomen Transportfahrzeugs verschiedenen zweiten elektrischen Antrieb und einen den zweiten elektrischen Antrieb speisenden zweiten elektrischen Energiespeicher aufweisen.

Der erste elektrische Antrieb kann zum Antreiben wenigstens eines Rades des autonomen Transportfahrzeugs ausgebildet sein, um durch Antreiben des mindestens einen Rades mittels des ersten elektrischen Antriebs das autonome Transportfahrzeug auf einer Fahrbahn fortzubewegen.

Der erste elektrische Energiespeicher dient zur Versorgung des ersten elektrischen Antriebs mit elektrischer Antriebsenergie.

Der zweite elektrische Antrieb kann zum Antreiben wenigstens eines Rades des Satellitenfahrzeugs, bzw. eines sonstigen Antriebselements, wie beispielsweise eines Ritzels, eines Zahnrads oder eines Kettenrads des Satellitenfahrzeugs ausgebildet sein, um durch Antreiben des Rades oder des sonstigen Antriebselements mittels des zweiten elektrischen Antriebs das Satellitenfahrzeug unabhängig von dem autonomen Transportfahrzeug eigenständig fahren zu können, insbesondere innerhalb des Regals bzw. innerhalb des Schachtes fahren zu können.

Der zweite elektrische Energiespeicher dient zur Versorgung des zweiten elektrischen Antriebs mit elektrischer Antriebsenergie.

Der zweite elektrische Energiespeicher des Satellitenfahrzeugs kann durch den ersten elektrischen Energiespeicher des autonomen Transportfahrzeugs aufladbar sein. Der zweite elektrische Energiespeicher des Satellitenfahrzeugs kann vorrangig dazu dienen, den zweiten elektrischen Antrieb mit elektrischer Antriebsenergie zu versorgen, derart, dass das Satellitenfahrzeug in einem vom autonomen Transportfahrzeug getrennten Zustand eigenständig innerhalb des Regallagers gefahren, insbesondere in dem Schacht selbständig automatisch aufsteigen und/oder absteigen kann. Da der zweite elektrische Energiespeicher des Satellitenfahrzeugs aufgeladen werden kann, wenn das Satellitenfahrzeug an dem autonomen Transportfahrzeug angekoppelt ist, können separate Ladestationen für die Satellitenfahrzeuge entfallen. Demgemäß können auch Totzeiten entfallen, die nötig wären, um das jeweilige Satellitenfahrzeug an die separate Ladestation heranzufahren, dort über einen Ladezeitraum an der Ladestation stehen zu lassen und das jeweilige Satellitenfahrzeug von der separate Ladestation wegzufahren und wieder an seien Einsatzort zurückzufahren. Die zweiten elektrischen Energiespeicher der Satellitenfahrzeuge sind also aufladbar während das Satellitenfahrzeug bzw. das autonomen Transportfahrzeug das Material, die Waren oder sonstige Stückgüter transportiert.

Gleichwohl können unabhängig der neuen Möglichkeit des Aufladens der zweiten elektrischen Energiespeicher der Satellitenfahrzeuge über die autonomen Transportfahrzeug, die Satellitenfahrzeuge gegebenenfalls zusätzlich oder alternativ auch an separaten, optionalen Ladestationen aufgeladen werden.

Der zweite elektrische Antrieb des Satellitenfahrzeugs kann einen Hubantrieb umfassen, der ausgebildet ist in Zusammenwirkung mit Hubfahrleisten des Regals ein autarkes vertikales Fahren des Satellitenfahrzeugs in dem mindestens einen Schacht des Regals zu ermöglichen.

Der Hubantrieb kann beispielsweise von dem zweiten Antrieb angetriebene Zahnräder oder sonstige Antriebselemente, wie beispielsweise auch doppelt verzahnte Zahnriemen umfassen, welche in Zahnstangen oder sonstigen Leisten als Hubfahrleisten am Regal eingreifen, so dass durch drehendes Antreiben der Zahnräder bzw. der sonstigen Antriebselemente das Satellitenfahrzeug an den Zahnstangen entlang am Regal bzw. in dem Schacht angetrieben aufsteigen und/oder absteigen kann. Statt einer Kombination von formschlüssig ineinandergreifenden Zahnrädern und Zahnstangen können beispielsweise auch kraftschlüssig zusammenwirkende Zahnriemen und Reibleisten zum Einsatz kommen. Die Zahnriemen können dabei Teil des Satellitenfahrzeugs sein, durch den zweiten Antrieb angetrieben sein, wobei die Deckseiten der Zahnriemen sich reibschlüssig gegen Reibleisten an dem Regal bzw. an dem Schacht abstützen.

Der zweite elektrische Antrieb des Satellitenfahrzeugs kann in einer speziellen Ausführungsvariante gegebenenfalls einen Fahrantrieb umfassen, der ausgebildet ist in Zusammenwirkung mit Horizontalschienen des Regals ein autarkes horizontales Fahren des Satellitenfahrzeugs in einer Ebene des Regals zu ermöglichen.

Der Fahrantrieb kann beispielsweise Räder aufweisen, welche durch den zweiten Antrieb angetrieben werden, wobei das Satellitenfahrzeug analog eines Straßenfahrzeugs auf horizontalen Fahrbahnen des Regals innerhalb einer Ebene bewegt werden kann. So kann das Satellitenfahrzeug automatisch beispielsweise von einem Regal zu einem anderen Regal wechseln oder von einem ersten Schacht zu einem zweiten Schacht wechseln.

Das Satellitenfahrzeug kann ein horizontal ausfahrbares Lastaufnahmemittel oder mehrere horizontal ausfahrbares Lastaufnahmemittel aufweisen und einen das wenigstens eine horizontal ausfahrbare Lastaufnahmemittel betätigenden dritten elektrischen Antrieb aufweisen, der über den zweiten elektrischen Energiespeicher des Satellitenfahrzeugs oder einem dritten elektrischen Energiespeicher des Satellitenfahrzeugs mit elektrischer Energie versorgt wird.

Das horizontal ausfahrbare Lastaufnahmemittel kann ausgebildet sein, ein neben dem Satellitenfahrzeug im Regal gelagertes Material, Ware oder sonstiges Stückgut zu unterfahren und auf das Satellitenfahrzeug zu übernehmen, so dass das Satellitenfahrzeug das Material, die Ware oder das sonstige Stückgut aufnimmt und trägt. Anschließend kann das aufgenommene Material, die aufgenommene Ware oder das aufgenommene sonstiges Stückgut durch Fahren des Satellitenfahrzeugs fortbewegt, insbesondere aus dem Regal herausgefahren und beispielsweise einem autonomen Transportfahrzeug zur weiteren logistischen Behandlung zugeführt werden.

Der dritte elektrische Antrieb kann ausgebildet sein, das Lastaufnahmemittel oder mehrere horizontal ausfahrbares Lastaufnahmemittel zwischen einer ausgefahrenen Aufnahmeposition und einer eingefahrenen Verwahrungsposition automatisch zu bewegen. In der eingefahrenen Verwahrungsposition kann das wenigstens eine Lastaufnahmemittel vollständig in die Außenkontur des Satellitenfahrzeugs integriert sein. In der ausgefahrenen Aufnahmeposition werden das Material, die Ware oder das sonstige Stückgut aufgenommen. Der dritte elektrische Antrieb kann durch den zweiten elektrischen Energiespeicher des Satellitenfahrzeugs mit elektrischer Antriebsenergie versorgt werden. Alternativ kann neben dem zweiten elektrischen Energiespeicher auch ein separater dritter elektrischer Energiespeicher am Satellitenfahrzeug vorgesehen sein, um den dritten elektrischen Antrieb mit elektrischer Antriebsenergie versorgen zu können. Der dritte elektrische Energiespeicher kann analog dem zweiten elektrischen Energiespeicher über die elektrischen Steckverbinder und die elektrischen Gegensteckverbinder, oder durch induktive, d.h. kontaktlos arbeitende elektrische Übertragungsmittel und induktive, d.h. kontaktlos arbeitende elektrische Gegenübertragungsmittel, durch den ersten elektrischen Energiespeicher des autonomen Transportfahrzeugs aufladbar sein.

Das wenigstens eine Regal weist eine von den Ebenen der Lagerplätze getrennte Fahrebene für das wenigstens eine autonome Transportfahrzeug auf.

Aufgrund der Fahrebene können die autonomen Transportfahrzeuge selbst in das Regal einfahren. Die Fahrebenen bilden insoweit Fahrbahnen für die autonomen Transportfahrzeuge. Die autonomen Transportfahrzeuge können dabei eingerichtet sein, zwischen verschiedenen Höhenebenen im Regal wechseln zu können und zwar automatisch angetrieben durch ihrer Fahrantrieb, die zum Fortbewegen des autonomen Transportfahrzeugs auf Fahrbahnen ausgebildet sind. Zur Überwindung von Höhenunterschieden zwischen zwei verschiedenen Ebenen können Rampen vorgesehen sein, welche die verschiedenen Ebenen verbinden und die ihrerseits Fahrbahnen für die autonomen Transportfahrzeuge bilden. Die autonomen Transportfahrzeuge benötigen dann insoweit keine Hubantriebe zum Aufsteigen und/oder Absteigen zwischen zwei Ebenen des Regals. Die Fahrebenen können durch bauliche Maßnahmen, wie Schutzwände, Absperrgitter oder sonstige Barrieren von anderen Funktionsebenen, wie beispielsweise Wartungsebenen, Serviceebenen oder Kommissionierarbeitsplätzen getrennt sein. Die baulichen Maßnahmen können insbesondere so gestaltet sein, dass ein Zutritt von Personen verhindert ist.

Das wenigstens eine Regal weist eine von den Ebenen der Lagerplätze und/oder von der Fahrebene für das wenigstens eine autonome Transportfahrzeug getrennte Wartungsebene auf, die durch Sicherheitseinrichtungen abgesichert ist, derart, dass Personen am Verlassen der Wartungsebene in den mindestens einen Schacht des Regals und/oder in die Fahrebene des Regals gehindert ist.

Die Wartungsebene kann Räume und/oder Gänge bilden, in denen sich Personen gefahrlos innerhalb des Regals bzw. zwischen den Regalen fortbewegen können. Die Wartungsebene kann dazu dienen, dass Personen alle notwendigen Orte innerhalb des Regals aufsuchen können, um dort Wartungsarbeiten, wie beispielsweise Inspektionen, Reparaturen und/oder Umrüstungen vornehmen zu können.

Das wenigstens eine Regal weist eine von den Ebenen der Lagerplätze, von der Fahrebene für das wenigstens eine autonome Transportfahrzeug und/oder von der Wartungsebene getrennte Serviceebene auf, die mit der Fahrebene des Regals über eine Fahrbahn verbunden ist, über welche das wenigstens eine autonome Transportfahrzeug selbstfahrend zwischen der Serviceebene des Regals und der Fahrebene des Regals wechseln kann.

Die Serviceebene kann dazu dienen, die autonomen Transportfahrzeuge und/oder die von den autonomen Transportfahrzeugen automatisch in die Serviceebene gefahrenen Satellitenfahrzeuge einem Service zu unterziehen, insbesondere Inspektionen, Reparaturen und/oder Umrüstungen an den autonomen Transportfahrzeugen und/oder den Satellitenfahrzeugen vornehmen zu können.

Die Fahrbahn wird von einer die Serviceebene des Regals mit der Fahrebene des Regals verbindenden, befahrbaren Rampe gebildet.

Die Rampe bildet insoweit eine Fahrbahn für die autonomen Transportfahrzeuge. Die autonomen Transportfahrzeuge können dabei eingerichtet sein, mittels der Rampe oder mehreren Rampen zwischen verschiedenen Höhenebenen im Regal wechseln zu können und zwar automatisch angetrieben durch ihrer Fahrantrieb, die zum Fortbewegen des autonomen Transportfahrzeugs auf Fahrbahnen ausgebildet sind. Zur Überwindung von Höhenunterschieden zwischen zwei verschiedenen Ebenen können diese Rampen vorgesehen sein, welche die verschiedenen Ebenen verbinden und die ihrerseits Fahrbahnen für die autonomen Transportfahrzeuge bilden.

Die Rampen können demgemäß eine Steigung in Fahrtrichtung aufweisen. Die Rampen können in einer ersten Ausführungsvariante gerade verlaufen. Die Rampen können in einer zweiten Ausführungsvariante mit ein oder mehreren Kurven oder als eine Helix ausgebildet sein. Die Rampen können insbesondere wendelförmig sich über ein oder mehrere Höhenebenen bzw. Stockwerke des Regals in Höhenrichtung erstrecken. Die wendelförmigen Rampen können in ein oder mehreren Höhenebenen Abfahrten oder Auffahrten aufweisen.

Das Intralogistiksystem kann mindestens einen manuellen Kommissionierarbeitsplatz aufweisen, mit mindestens einer Entnahmestelle, die ausgebildet ist zum manuellen Entnehmen durch eine Person von Stückgütern aus Behältern, die mittels des Satellitenfahrzeugs und/oder des autonomen Transportfahrzeugs herangefahren sind, wobei der Kommissionierarbeitsplatz einen der Entnahmestelle zugeordneten Fahrbahnabschnitt aufweist, der ausgebildet ist, zum Fahren des Satellitenfahrzeugs und/oder des autonomen Transportfahrzeugs auf dem Fahrbahnabschnitt, und wobei der an der Entnahmestelle angeordnete Fahrbahnabschnitt aus einer horizontalen Ebene heraus geneigt verläuft, derart, dass das an die Entnahmestelle herangefahrene Satellitenfahrzeug und/oder autonome Transportfahrzeug aufgrund des geneigten Verlaufs des Fahrbahnabschnitts in Richtung der Person geschwenkt positioniert ist, wenn das Satellitenfahrzeug und/oder das autonome Transportfahrzeug die Entnahmestelle erreicht hat. Der manuelle Kommissionierarbeitsplatz kann auch als Roboter-Kommissionierarbeitsplatz ausgebildet sein.

An dem manuellen Kommissionierarbeitsplatz kann eine Person die auftragsgemäßen Materialien, Waren oder Stückgüter, die aus dem in dem Regal gelagerten Sortiment mittels der autonomen Transportfahrzeugen und/oder Satellitenfahrzeuge heraustransportiert sind, manuell zusammenstellen. Die autonomen Transportfahrzeuge tragen dabei insbesondere die Satellitenfahrzeuge, welche mit den georderten Materialien, Waren oder Stückgüter bestückt sind. Die Person entnimmt an dem manuellen Kommissionierarbeitsplatz von dem Satellitenfahrzeug die benötigte Ware um den Auftrag zusammenzustellen.

Der Fahrbahnabschnitt kann im Bereich des manuellen Kommissionierarbeitsplatzes geneigt verlaufen, so dass das autonome Transportfahrzeug und somit auch das Satellitenfahrzeug beim Anfahren an den manuellen Kommissionierarbeitsplatz auf die Person zu geschwenkt wird, so dass die Materialien, Waren oder Stückgüter in besonders ergonomischer Weise der Person zum Entnehmen angeboten wird. Beim Verlassen des manuellen Kommissionierarbeitsplatzes kann die Fahrbahn wieder eine horizontale Ausrichtung annehmen, so dass das autonome Transportfahrzeug und somit auch das Satellitenfahrzeug nach Verlassen des manuellen Kommissionierarbeitsplatzes wieder eine horizontale Ausrichtung einnimmt.

Das Intralogistiksystem kann mehrere derartige autonome Transportfahrzeuge und mehrere vom autonomen Transportfahrzeug verschiedene, derartige Satellitenfahrzeuge aufweisen und einen Vorzonen-Parkplatz umfassen, der ausgebildet ist, zum vorübergehenden Parken der jeweils mit einem Satellitenfahrzeug und mit wenigstens einem darauf transportieren Stückgut ausgestatteten autonomen Transportfahrzeuge in beliebiger Reihenfolge, und zum Ausfahren der autonomen Transportfahrzeuge aus dem Vorzonen-Parkplatz in einer sortierten Reihenfolge.

Der Vorzonen-Parkplatz kann mehrere Stellplätze aufweisen. Jeder Stellplatz kann ausgebildet sein zum Aufnehmen eines autonomen Transportfahrzeugs in einer Parkposition. Der Vorzonen-Parkplatz kann ein oder mehrere Zufahrten und ein oder mehrere Abfahrten aufweisen. Die am Vorzonen-Parkplatz ankommenden autonomen Transportfahrzeuge können in sortierter Reihenfolge auf den Stellplätzen des Vorzonen-Parkplatzes abgestellt werden und anschließend gemäß der sortierten Reihenfolge nacheinander über die Abfahrt von dem Vorzonen-Parkplatz herausgefahren werden. Alternativ können die am Vorzonen-Parkplatz ankommenden autonomen Transportfahrzeuge unsortiert auf den Stellplätzen des Vorzonen-Parkplatzes abgestellt werden und anschließend dadurch sortiert werden, dass die zwischengeparkten autonomen Transportfahrzeuge sequenziert gemäß der gewünschten Reihenfolge von dem Vorzonen-Parkplatz herausgefahren werden. Die beiden Arten von Sequenzierungen können automatisch durchgeführt werden, insbesondere durch automatisches Ansteuern der autonomen Transportfahrzeuge beim Zufahren auf den Vorzonen-Parkplatz und beim Abfahren von dem Vorzonen-Parkplatz. Dazu kann eine Logistiksteuerung eingesetzt werden, welche beispielsweise drahtlos, insbesondere über WLAN oder RFID, mit den autonomen Transportfahrzeugen kommuniziert.

Wenigstens eines der autonomen Transportfahrzeuge kann eingerichtet sein zum Transportieren mehrerer Satellitenfahrzeuge in unterschiedlichen Betriebszeitabschnitten des autonomen Transportfahrzeugs jeweils zeitlich nacheinander.

Das wenigstens eine autonome Transportfahrzeug kann eine erste Aufnahmeeinrichtung aufweisen, die ausgebildet ist, das Satellitenfahrzeug lösbar aufzunehmen, so dass in einem aufgenommenen Zustand das Satellitenfahrzeug mit dem autonomen Transportfahrzeug verbunden ist und eine fahrbare Einheit bildet, derart, dass das Satellitenfahrzeug durch Fahren des autonomen Transportfahrzeugs mitbewegt wird, und in einem gelösten Zustand das Satellitenfahrzeug von dem autonomen Transportfahrzeug getrennt ist und unabhängig von dem autonomen Transportfahrzeug eigenständig fahrbar ist. Das wenigstens eine autonome Transportfahrzeug kann zusätzlich eine zweite Aufnahmeeinrichtung aufweisen, die ausgebildet ist, einen Stückgutträger, wie beispielsweise einen Behälter oder einen Tray (Tablar), direkt aufzunehmen. Bei einer direkten Aufnahme eines Stückgutträgers auf dem autonomen Transportfahrzeug mittels der zweiten Aufnahmeeinrichtung kann eine zwischengefügte Anordnung eines Satellitenfahrzeugs entfallen. Die zweite Aufnahmeeinrichtung kann eine von der ersten Aufnahmeeinrichtung verschiedene Aufnahmeeinrichtung sein. Alternativ können die erste Aufnahmeeinrichtung und die zweite Aufnahmeeinrichtung funktionsvereinigend von derselben Aufnahmeeinrichtung gebildet werden. In diesem Fall können die Stückgutträger und die Satellitenfahrzeuge gleichartige Gegenhaltemittel zu Haltemitteln des autonomen Transportfahrzeugs aufweisen.

Ein repräsentativer Ablauf kann beispielsweise wie folgt gestaltet sein:
Das Intralogistiksystem ist in Betrieb und es sind bereits mehrere Satellitenfahrzeuge im Intralogistiksystem verteilt angeordnet. An einem Kommissionierarbeitsplatz ist ein Stückgutträger bearbeitet worden und soll zurück an einen bestimmten Lagerplatz des Regals gebracht werden. Dazu nimmt ein in der Nähe des betreffenden Stückgutträgers befindliches autonomes Transportfahrzeug den Stückgutträger direkt auf und transportiert ihn automatisch an den bestimmten Lagerplatz des Regals. Auf der Fahrt zu dem bestimmten Lagerplatz wird ein Satellitenfahrzeug zusätzlich aufgenommen. Dazu kann an einer Aufnahmestelle das autonome Transportfahrzeug den Stückgutträger zunächst an das Satellitenfahrzeug abgeben, um dann das Satellitenfahrzeug, welches nun den Stückgutträger aufweist, aufzunehmen. Am Ankunftsort des bestimmten Lagerplatzes des Regals können das Satellitenfahrzeug zusammen mit dem Stückgutträger abgesetzt werden. Das Satellitenfahrzeug kann nun eigenständig den Stückgutträger an den gewünschten Lagerplatz des Regals bringen. Währenddessen ist das autonome Transportfahrzeug bereits wieder verfügbar für andere Transportaufgaben. Eine solche andere Transportaufgabe kann ein wartendes anderes Satellitenfahrzeug sein, das einen Stückgutträger aufweist, welcher anderes Material, andere Waren oder ein anderes Stückgut enthält, das beispielsweise an einen manuellen Kommissionierarbeitsplatz gebracht werden soll. Das autonome Transportfahrzeug fährt zu diesem anderen Satellitenfahrzeug und nimmt es zusammen mit dem Stückgutträger und dem anderen Material, der anderen Waren oder dem anderen Stückgut auf, um zu dem gewünschten manuellen Kommissionierarbeitsplatz zu fahren. Auf diesem Rückweg kann das autonome Transportfahrzeug ggf. das Satellitenfahrzeug an einer Zwischenstation abgeben und den Stückgutträger und das andere Material, die andere Waren oder das andere Stückgut an den vorgesehenen manuellen Kommissionierarbeitsplatz bringen, ohne das Satellitenfahrzeug bis zur Zielposition mitführen zu müssen. Das vom autonomen Transportfahrzeug entlassene Satellitenfahrzeug kann zwischenzeitlich andere Aufgaben erledigen. Nachdem das autonome Transportfahrzeug den Stückgutträger an dem manuellen Kommissionierarbeitsplatz abgesetzt hat, kann das autonome Transportfahrzeug weitere Aufgaben erledigen. Wenn die erforderlichen Fahrstrecken der Satellitenfahrzeuge alleine deutlich kürzer sind, als die erforderlichen Fahrstrecken der autonomen Transportfahrzeuge, was im Allgemeinen der Fall ist, können einem einzelnen autonomen Transportfahrzeug mehrere Satellitenfahrzeuge zugeordnet werden. Konkrete Ausführungsbeispiele der Erfindung sind in der nachfolgenden Beschreibung unter Bezugnahme auf die beigefügten Figuren näher erläutert.

Es zeigen:
- Fig. 1: eine perspektivische Darstellung eines erfindungsgemäßen Intralogistiksystems mit mehreren autonomen Transportfahrzeugen und Satellitenfahrzeug, sowie beispielhafte Regale mit einem Schacht für das Satellitenfahrzeug,
- Fig. 2: eine perspektivische Darstellung eines beispielhaften autonomen Transportfahrzeugs mit einem aufgenommenen Satellitenfahrzeug und einem ausfahrbaren Lastaufnahmemittel,
- Fig. 3: eine schematische Darstellung des beispielhaften autonomen Transportfahrzeugs gemäß Fig. 2 mit Komponenten,
- Fig. 4: eine perspektivische Darstellung des autonomen Transportfahrzeugs gemäß Fig. 2 und Fig. 3 mit dem Lastaufnahmemittel in einem ausgefahrenen Zustand mit aufgenommenem Stückgut,
- Fig. 5: eine perspektivische Darstellung des autonomen Transportfahrzeugs gemäß Fig. 2 bis Fig. 4 mit dem Lastaufnahmemittel in einem eingefahrenen Zustand mit dem Stückgut,
- Fig. 6: eine vergrößerte Teildarstellung des Satellitenfahrzeugs mit seinem Hubantrieb an Hubfahrleisten des Schachtes am Regal,
- Fig. 7: eine schematische Darstellung einer beispielhaften ersten Weiterbildung des Intralogistiksystems mit einer Wartungsebene,

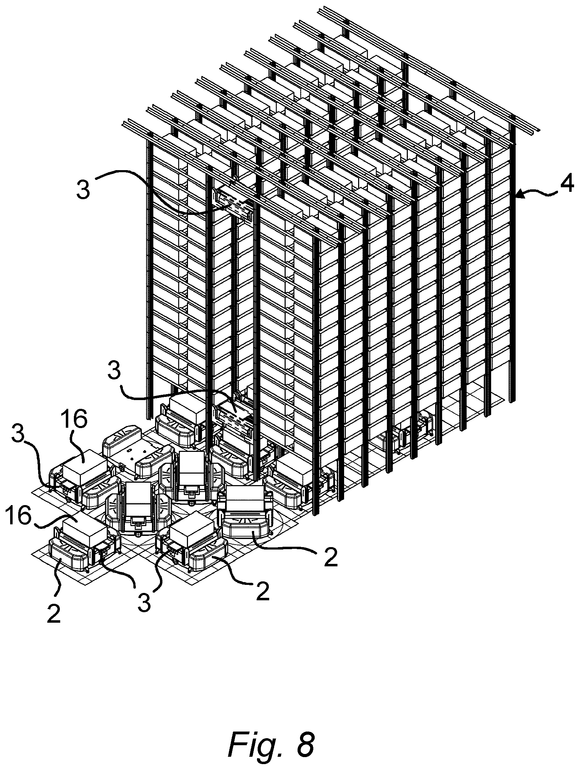

- Fig. 8: eine schematische Darstellung einer beispielhaften ersten Weiterbildung des Intralogistiksystems mit einem Vorzonen-Parkplatz,
- Fig. 9: eine schematische Darstellung des Vorzonen-Parkplatzes mit Sortierfunktion,
- Fig. 10: eine schematische Darstellung einer beispielhaften zweiten Weiterbildung des Intralogistiksystems mit einer Übergabezone an Fördereinrichtungen,
- Fig. 11: eine schematische Darstellung einer beispielhaften dritten Weiterbildung des Intralogistiksystems mit befahrbaren Rampen für die autonomen Transportfahrzeuge,
- Fig. 12: eine schematische Darstellung einer beispielhaften vierten Weiterbildung des Intralogistiksystems mit befahrbaren Rampen für die autonomen Transportfahrzeuge zum Wechseln zwischen Lagerplatzebenen, Wartungsebenen und/oder Serviceebenen,
- Fig. 13: eine schematische Darstellung einer beispielhaften fünften Weiterbildung des Intralogistiksystems mit befahrbaren Rampen für die autonomen Transportfahrzeuge zum Wechseln zwischen Lagerplatzebenen, Wartungsebenen und/oder Serviceebenen,
- Fig. 14: eine schematische Darstellung eines Intralogistiksystems mit Fahrebenen, Wartungsebenen und Serviceebenen,
- Fig. 15: eine schematische Darstellung einer beispielhaften sechsten Weiterbildung des Intralogistiksystems mit Fahrbahnabschnitten für die autonomen Transportfahrzeuge an einem manuellen Kommissionierarbeitsplatz, und
- Fig. 16: eine schematische Darstellung des manuellen Kommissionierarbeitsplatzes gemäß Fig. 15 mit dem aus der horizontalen Ebene heraus gekippten Fahrbahnabschnitt.

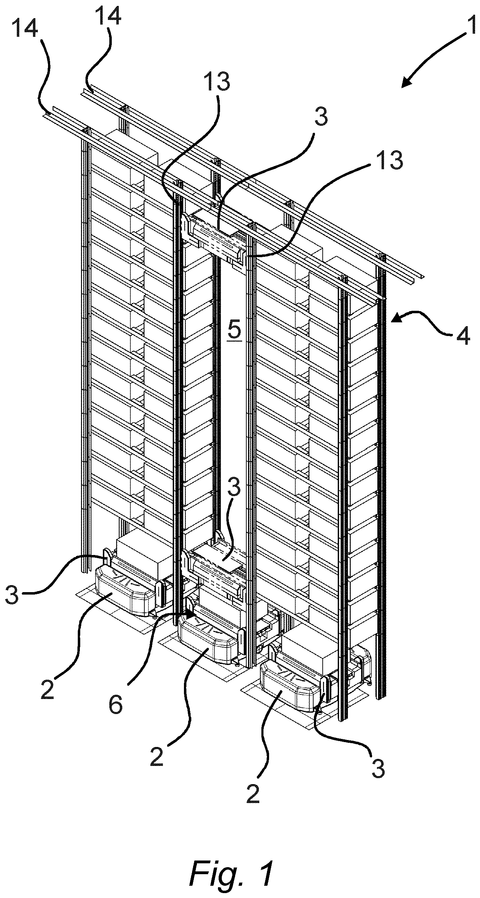

Die Fig. 1 zeigt eine beispielhafte Ausführungsforme eines Intralogistiksystems 1. Das Intralogistiksystem 1 weist im Falle des vorliegenden Ausführungsbeispiels beispielsweise drei autonome Transportfahrzeuge 2, und mehrere von den autonomen Transportfahrzeuges 2 verschiedene Satellitenfahrzeug 3 auf.

Das Intralogistiksystem 1 umfasst außerdem wenigstens ein Regal 4 mit Lagerplätzen in mehreren Ebenen und mit mindestens einem Schacht 5, der ausgebildet ist zum vertikalen Fahren der Satellitenfahrzeuge 3 in dem Schacht 5. Mittels des Schachtes 5 können die Satellitenfahrzeuge 3 zwischen den Ebenen des Regals 4 automatisch wechseln.

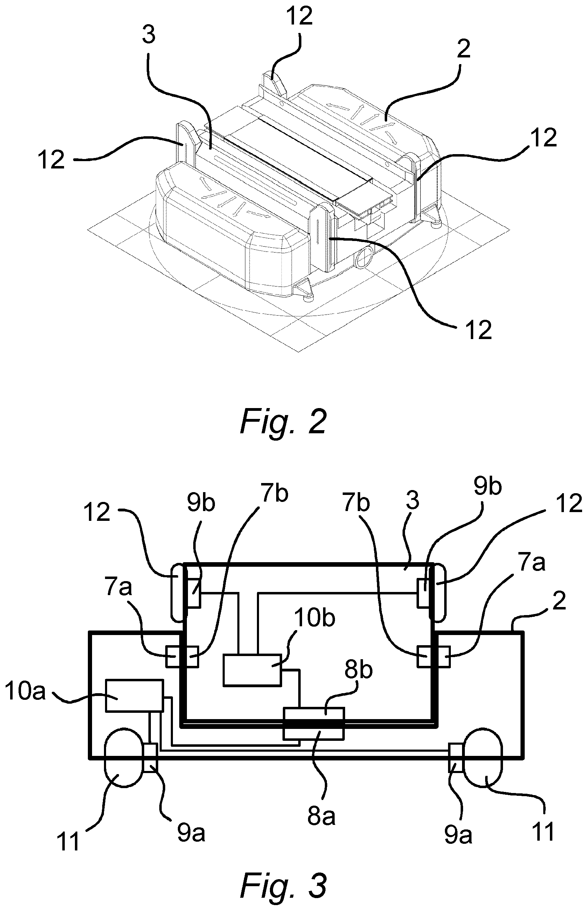

Die Fig. 2 und Fig. 3 zeigen ein einzelnes autonomes Transportfahrzeug 2, das eine Aufnahmeeinrichtung 6 (Fig. 1) aufweist, die ausgebildet ist, das Satellitenfahrzeug 3 lösbar aufzunehmen, so dass in einem aufgenommenen Zustand (bspw. Fig. 3) das Satellitenfahrzeug 3 mit dem autonomen Transportfahrzeug 2 verbunden ist und eine fahrbare Einheit bildet, derart, dass das Satellitenfahrzeug 3 durch Fahren des autonomen Transportfahrzeugs 2 mitbewegt wird, und in einem gelösten Zustand (Fig. 1 Mitte) das Satellitenfahrzeug 3 von dem autonomen Transportfahrzeug 2 getrennt ist und unabhängig von dem autonomen Transportfahrzeug 2 eigenständig fahrbar ist.

Wie insbesondere in Fig. 3 schematisch dargestellt ist, weist das wenigstens eine autonome Transportfahrzeug 2 Haltemittel 7a auf und das Satellitenfahrzeug 3 weist zu den Haltemitteln 7a des autonomen Transportfahrzeug 2 komplementäre Gegenhaltemittel 7b auf. Die Haltemittel 7a und die Gegenhaltemittel 7b halten in ihrem Verbindungszustand das Satellitenfahrzeug 3 auf dem autonomen Transportfahrzeug 2 fest.

Außerdem weist das autonome Transportfahrzeug 2 in dieser Ausführungsform einen elektrischen Steckverbinder 8a auf und das Satellitenfahrzeug 3 weist einen zu dem elektrischen Steckverbinder 8a des autonomen Transportfahrzeug 2 korrespondierenden elektrischen Gegensteckverbinder 8b auf. Der elektrische Steckverbinder 8a und der elektrische Gegensteckverbinder 8b verbinden in einem miteinander kontaktierten Zustand das Satellitenfahrzeug 3 elektrisch mit dem autonomen Transportfahrzeug 2, so dass elektrische Energie zwischen dem autonomen Transportfahrzeug 2und dem Satellitenfahrzeug 3 übertragbar ist.

Das autonome Transportfahrzeug 2 weist erste elektrische Antriebe 9a und einen die ersten elektrischen Antriebe 9a speisenden ersten elektrischen Energiespeicher 10a auf. Das Satellitenfahrzeug 3 weist von den ersten elektrischen Antrieben 9a des autonomen Transportfahrzeugs 2 verschiedene zweite elektrische Antriebe 9b und einen die zweiten elektrischen Antriebe 9b speisenden zweiten elektrischen Energiespeicher 10b auf.

Das autonome Transportfahrzeug 2 weist ein Fahrwerk mit mehreren angetriebenen Rädern 11 auf, die ausgebildet sind zum selbständigen d.h. fahrerlosen, automatisierten Fahren des autonomen Transportfahrzeugs 2 auf einer Fahrbahn innerhalb des Intralogistiksystems 1 bzw. innerhalb eines Betriebsgeländes.

Aufgrund des elektrischen Steckverbinders 8a und des elektrischen Gegensteckverbinders 8b kann in einem elektrisch verbundenen Zustand, wie dargestellt, der zweite elektrische Energiespeicher 10b des Satellitenfahrzeugs 3 durch den ersten elektrischen Energiespeicher 10a des autonomen Transportfahrzeugs 2 aufgeladen werden.

Der zweite elektrische Antrieb 9b des Satellitenfahrzeugs 3 umfasst Hubantriebe 12, die ausgebildet sind in Zusammenwirkung mit Hubfahrleisten 13 des Regals 4 (Fig. 1) ein autarkes vertikales Fahren des Satellitenfahrzeugs 3 in dem mindestens einen Schacht 5 des Regals 4 zu ermöglichen.

Der zweite elektrische Antrieb 9b des Satellitenfahrzeugs 3 kann einen Fahrantrieb umfassen, der ausgebildet ist in Zusammenwirkung mit Horizontalschienen 14 (Fig. 1) des Regals 4 ein autarkes horizontales Fahren des Satellitenfahrzeugs 3 in einer Ebene des Regals 4 zu ermöglichen.

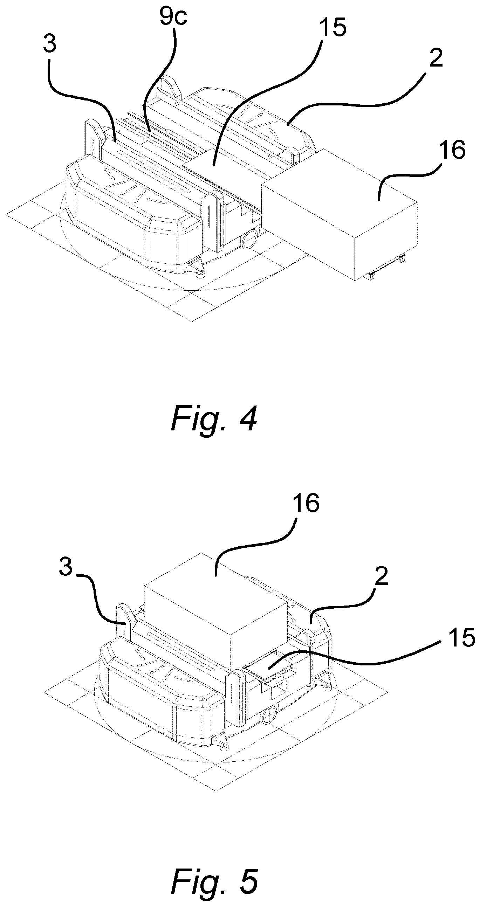

Die Fig. 4 und Fig. 5 zeigen eine Ausführungsform, bei der das Satellitenfahrzeug 3 ein horizontal ausfahrbares Lastaufnahmemittel 15 aufweist. Die Fig. 4 zeigt das Satellitenfahrzeug 3 mit einem ausgefahrenen Lastaufnahmemittel 15 und ein von dem ausgefahrenen Lastaufnahmemittel 15 getragenes Stückgut 16. Die Fig. 5 zeigt das Satellitenfahrzeug 3 mit einem eingefahrenen Lastaufnahmemittel 15, wobei das Stückgut 16 von dem eingefahrenen Lastaufnahmemittel 15 getragen wird und somit sowohl das Lastaufnahmemittel 15, als auch das Stückgut 16 sich vollständig innerhalb der Umfangskontur des Satellitenfahrzeugs 3 befinden.

Das horizontal ausfahrbare Lastaufnahmemittel kann einen dritten elektrischen Antrieb 9c (Fig. 4) umfassen, der beispielsweise über den zweiten elektrischen Energiespeicher 10b des Satellitenfahrzeugs 3 mit elektrischer Energie versorgt wird.

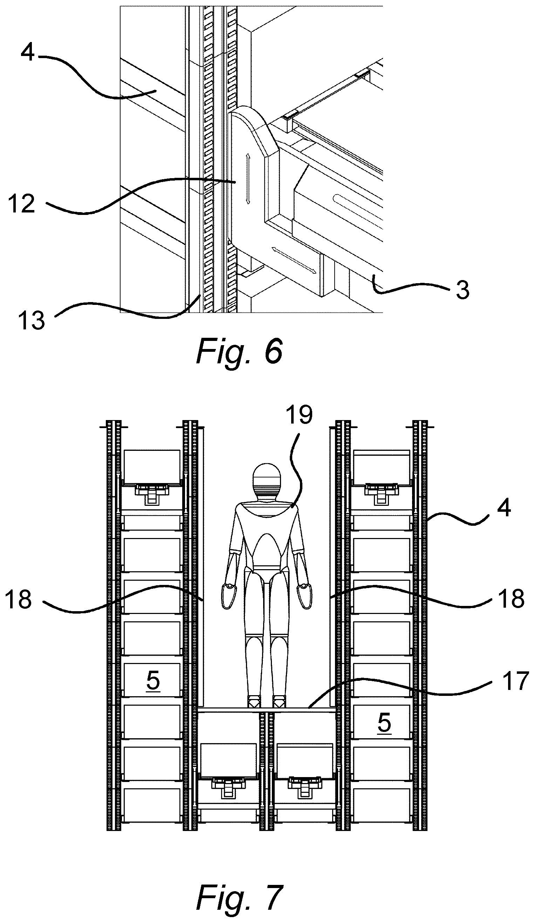

Die Fig. 6 zeigt eine vergrößerte Teildarstellung des Satellitenfahrzeugs 3 mit seinem Hubantrieb 12 an einer Hubfahrleiste 13 des Schachtes 5 am Regal 4. Der Hubantrieb 12 kann beispielsweise von dem zweiten Antrieb 9b angetriebene Zahnräder umfassen, welche in Zahnstangen als Hubfahrleisten 13 am Regal 4 eingreifen, so dass durch drehendes Antrieben der Zahnräder das Satellitenfahrzeug 3 an den Zahnstangen entlang am Regal 4 bzw. in dem Schacht 5 angetrieben aufsteigen und/oder absteigen kann. Statt einer Kombination von formschlüssig ineinandergreifenden Zahnrädern und Zahnstangen können beispielsweise auch kraftschlüssig zusammenwirkende Zahnriemen und Reibleisten zum Einsatz kommen. Die Zahnriemen können dabei Teil des Satellitenfahrzeugs 3 sein, durch den zweiten Antrieb 9b angetrieben sein, wobei die Deckseiten der Zahnriemen sich reibschlüssig gegen Reibleisten an dem Regal 4 bzw. an dem Schacht 5 abstützen.

Wie in Fig. 7 dargestellt ist, kann das wenigstens eine Regal 4 eine Wartungsebene 17 aufweisen, die durch Sicherheitseinrichtungen 18 abgesichert ist, derart, dass Personen 19 am Verlassen der Wartungsebene 17 in den mindestens einen Schacht 5 des Regals 4 und/oder in die Fahrebenen des Regals 4 gehindert ist.

Das wenigstens eine autonome Transportfahrzeug 2 kann eingerichtet sein zum Transportieren mehrerer Satellitenfahrzeuge 3 in unterschiedlichen Betriebszeitabschnitten des autonomen Transportfahrzeugs 2 jeweils zeitlich nacheinander.

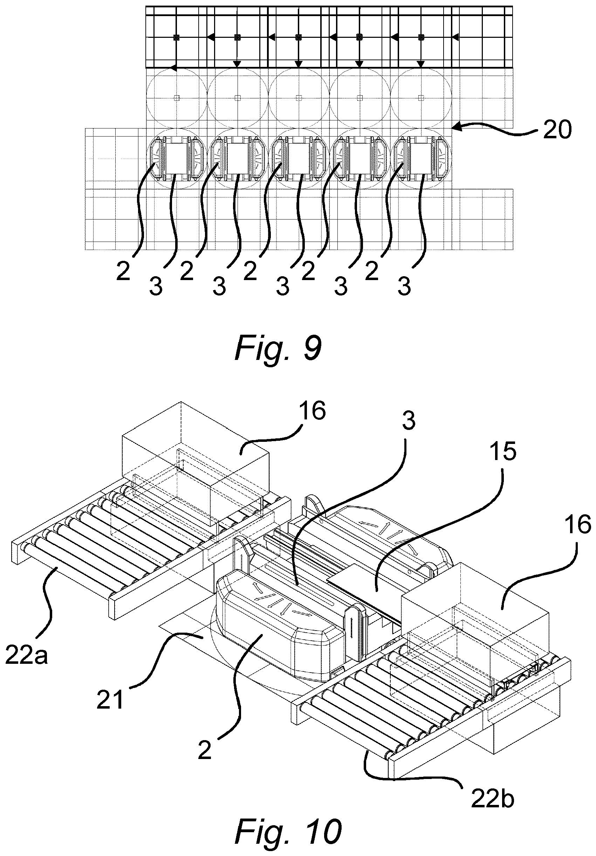

Wie in Fig. 9 schematisch aufgezeigt ist, kann das Intralogistiksystem 1 mehrere autonome Transportfahrzeuge 2 und mehrere vom autonomen Transportfahrzeug 2 verschiedene Satellitenfahrzeuge 3 aufweisen. Das Intralogistiksystem 1 kann dabei einen Vorzonen-Parkplatz 20 umfassen, der ausgebildet ist, zum vorübergehenden Parken der jeweils mit einem Satellitenfahrzeug 3 und mit wenigstens einem darauf transportieren Stückgut 16 ausgestatteten autonomen Transportfahrzeuge 2 in beliebiger Reihenfolge, und zum Ausfahren der autonomen Transportfahrzeuge 2 aus dem Vorzonen-Parkplatz 20 in einer sortierten Reihenfolge.

In der Fig. 10 ist angedeutet, wie das Regal 4 eine von den Ebenen der Lagerplätze getrennte Fahrebene 21 für das wenigstens eine autonome Transportfahrzeug 2 aufweisen kann. Das Lastaufnahmemittel 15 kann dabei eingerichtet sein, das Stückgut 16 wahlweise von einem ersten flurgebundenen Stetigförderer 22a aufzunehmen und/oder auf einen zweiten flurgebundenen Stetigförderer 22a abzugeben.

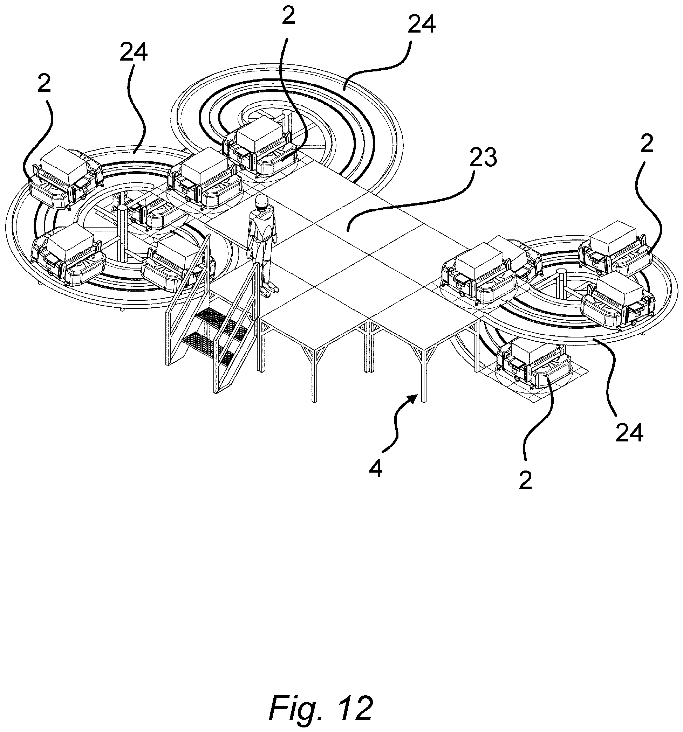

In der Fig. 12 ist in einer beispielhaften Ausführungsform schematisch aufgezeigt, wie das wenigstens eine Regal 4 eine von den Ebenen der Lagerplätze, von der Fahrebene 21 (Fig. 10) für das wenigstens eine autonome Transportfahrzeug 2 und/oder von der Wartungsebene 17 (Fig. 7) getrennte Serviceebene 23 aufweisen kann, die mit der Fahrebene über eine oder mehrere Fahrbahnen 24 verbunden ist, über welche das wenigstens eine autonome Transportfahrzeug 2 selbstfahrend zwischen der Serviceebene 23 und der Fahrebene 21 wechseln kann.

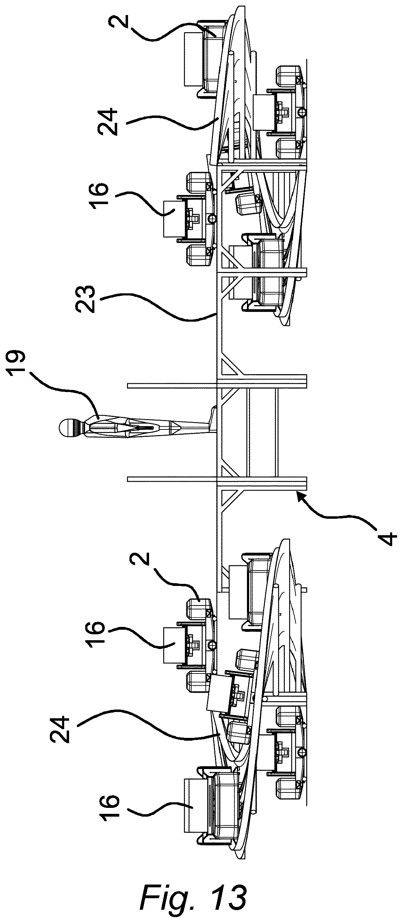

Die Fahrbahnen 24 können, wie dargestellt, von die Serviceebene 23 mit der Fahrebene 21 verbindenden, befahrbaren Rampen gebildet werden. Die Rampen sind außerdem in Fig. 13 von der Seite dargestellt gezeigt.

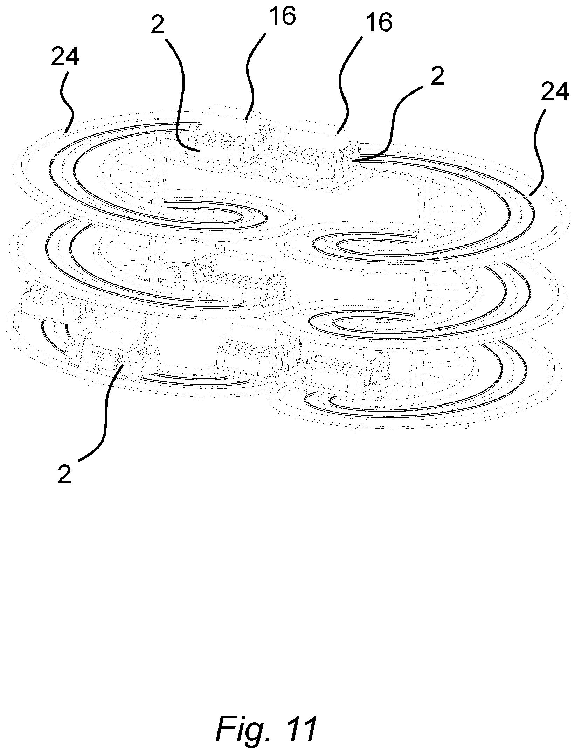

Die Rampen können, wie beispielsweise in Fig. 11 dargestellt ist, insbesondere wendelförmig sich über ein oder mehrere Höhenebenen bzw. Stockwerke in Höhenrichtung erstrecken. Die wendelförmigen Rampen können in ein oder mehreren Höhenebenen Abfahrten oder Auffahrten aufweisen.

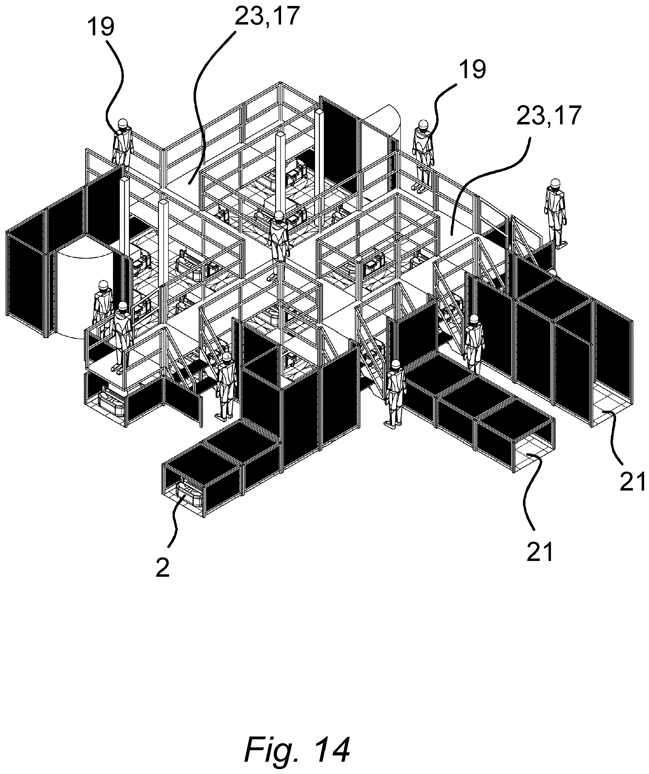

In Fig. 14 sind nochmals Serviceebenen 23 dargestellt, die im Gegensatz zu den Serviceebenen 23 gemäß Fig. 12 anders angeordnet sind. Diese können auch Wartungsebenen 17 analog der Fig. 7 bilden.

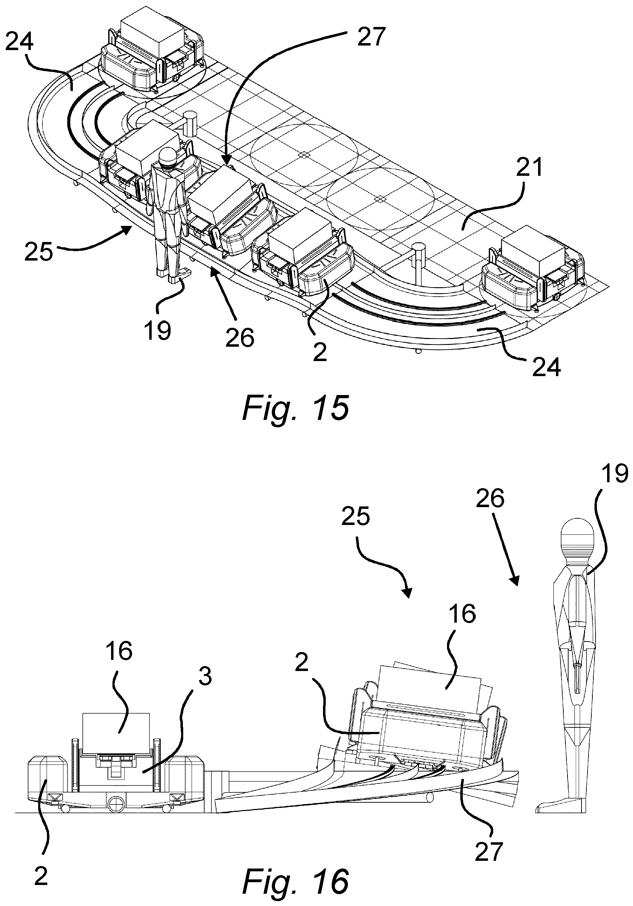

Die Fig. 15 und Fig. 16 zeigen einen Bereich des Intralogistiksystems 1 eines manuellen Kommissionierarbeitsplatzes 25 mit einer Entnahmestelle 26, die ausgebildet ist zum manuellen Entnehmen durch eine Person 19 von Stückgütern 16 aus Behältern, die mittels des Satellitenfahrzeugs 3 bzw. des autonomen Transportfahrzeugs 2 herangefahren sind, wobei der Kommissionierarbeitsplatz 25 mindestens einen der Entnahmestelle 26 zugeordneten Fahrbahnabschnitt 27 aufweist, der ausgebildet ist, zum Fahren des Satellitenfahrzeugs 3 und/oder des autonomen Transportfahrzeugs 2 auf dem Fahrbahnabschnitt 27, und wobei der an der Entnahmestelle 26 angeordnete Fahrbahnabschnitt 27 aus einer horizontalen Ebene heraus geneigt verläuft, derart, dass das an die Entnahmestelle 26 herangefahrene Satellitenfahrzeug 3 und/oder autonome Transportfahrzeug 2 aufgrund des geneigten Verlaufs des Fahrbahnabschnitts 27 in Richtung der Person 19 geschwenkt positioniert ist, wenn das Satellitenfahrzeug 3 und/oder das autonome Transportfahrzeug 2 die Entnahmestelle 26 erreicht hat.

## Patentansprüche

1. Intralogistiksystem, aufweisend wenigstens ein autonomes Transportfahrzeug (2), wenigstens ein vom autonomen Transportfahrzeug (2) verschiedenes Satellitenfahrzeug (3), und wenigstens ein Regal (4) mit Lagerplätzen in mehreren Ebenen, wobei dass das wenigstens eine Regal (4) eine von den Ebenen der Lagerplätze getrennte Fahrebene (21) für das wenigstens eine autonome Transportfahrzeug (2) aufweist, und mit mindestens einem Schacht (5), der ausgebildet ist zum vertikalen Fahren des Satellitenfahrzeugs (3) in dem Schacht (5), derart, dass das Satellitenfahrzeug (3) zwischen den Ebenen des Regals (4) automatisch wechseln kann, wobei das autonome Transportfahrzeug (2) eine Aufnahmeeinrichtung (6) aufweist, die ausgebildet ist, das Satellitenfahrzeug (3) lösbar aufzunehmen, so dass in einem aufgenommenen Zustand das Satellitenfahrzeug (3) mit dem autonomen Transportfahrzeug (2) verbunden ist und eine fahrbare Einheit bildet, derart, dass das Satellitenfahrzeug (3) durch Fahren des autonomen Transportfahrzeugs (2) mitbewegt wird, und in einem gelösten Zustand das Satellitenfahrzeug (3) von dem autonomen Transportfahrzeug (2) getrennt ist und unabhängig von dem autonomen Transportfahrzeug (2) eigenständig fahrbar ist, **dadurch gekennzeichnet, dass** das wenigstens eine Regal (4) eine von den Ebenen der Lagerplätze und/oder von der Fahrebene (21) für das wenigstens eine autonome Transportfahrzeug (2) getrennte Wartungsebene (17) aufweist, die durch Sicherheitseinrichtungen (18) abgesichert ist, derart, dass Personen (19) am Verlassen der Wartungsebene (17) in den mindestens einen Schacht (5) des Regals (4) und/oder in die Fahrebene (21) des Regals (4) gehindert sind, und das wenigstens eine Regal (4) eine von den Ebenen der Lagerplätze, von der Fahrebene (21) für das wenigstens eine autonome Transportfahrzeug (2) und/oder von der Wartungsebene (17) getrennte Serviceebene (23) aufweist, die mit der Fahrebene (21) über eine Fahrbahn (24) verbunden ist, über welche das wenigstens eine autonome Transportfahrzeug (2) selbstfahrend zwischen der Serviceebene (23) und der Fahrebene (21) wechseln kann, wobei die Fahrbahn (24) von einer die Serviceebene (23) mit der Fahrebene (21) des Regals (4) verbindenden, befahrbaren Rampe gebildet wird.

2. Intralogistiksystem nach Anspruch 1, **dadurch gekennzeichnet, dass** das wenigstens eine autonome Transportfahrzeug (2) Haltemittel (7a) aufweist und das Satellitenfahrzeug (3) zu den Haltemitteln (7a) des autonomen Transportfahrzeug (3) komplementäre Gegenhaltemittel (7b) aufweist, wobei die Haltemittel (7a) und die Gegenhaltemittel (7b) in ihrem Verbindungszustand das Satellitenfahrzeug (3) auf dem autonomen Transportfahrzeug (2) festhalten, und in ihrem Freigabezustand das Satellitenfahrzeug (3) von dem autonomen Transportfahrzeug (2) freigeben.

3. Intralogistiksystem nach Anspruch 1 oder 2, **dadurch gekennzeichnet, dass** das wenigstens eine autonome Transportfahrzeug (2) wenigstens einen elektrischen Steckverbinder (8a) aufweist und das Satellitenfahrzeug (3) wenigstens einen zu dem elektrischen Steckverbinder (8a) des autonomen Transportfahrzeug (2) korrespondierenden elektrischen Gegensteckverbinder (8b) aufweist, wobei der elektrische Steckverbinder (8a) und der elektrische Gegensteckverbinder (8b) in einem miteinander kontaktierten Zustand das Satellitenfahrzeug (3) elektrisch mit dem autonomen Transportfahrzeug (2) verbinden, so dass elektrische Energie zwischen dem autonomen Transportfahrzeug (2) und dem Satellitenfahrzeug (3) übertragbar ist, und in einem unterbrochenen Zustand das Satellitenfahrzeug (3) elektrisch von dem autonomen Transportfahrzeug (2) getrennt ist.

4. Intralogistiksystem nach einem der Ansprüche 1 bis 3, **dadurch gekennzeichnet, dass** das autonome Transportfahrzeug (2) wenigstens einen ersten elektrischen Antrieb (9a) und einen den ersten elektrischen Antrieb (9a) speisenden ersten elektrischen Energiespeicher (10a) aufweist und das Satellitenfahrzeug (3) einen von dem ersten elektrischen Antrieb (9a) des autonomen Transportfahrzeugs (2) verschiedenen zweiten elektrischen Antrieb (9b) und einen den zweiten elektrischen Antrieb (9b) speisenden zweiten elektrischen Energiespeicher (10b) aufweist.

5. Intralogistiksystem nach Anspruch 4, **dadurch gekennzeichnet, dass** der zweite elektrische Energiespeicher (10b) des Satellitenfahrzeugs (3) durch den ersten elektrischen Energiespeicher (10a) des autonomen Transportfahrzeugs (2) aufladbar ist.

6. Intralogistiksystem nach Anspruch 4 oder 5, **dadurch gekennzeichnet, dass** der zweite elektrische Antrieb (9b) des Satellitenfahrzeugs (3) einen Hubantrieb (12) umfasst, der ausgebildet ist in Zusammenwirkung mit Hubfahrleisten (13) des Regals (4) ein autarkes vertikales Fahren des Satellitenfahrzeugs (3) in dem mindestens einen Schacht (5) des Regals (4) zu ermöglichen.

7. Intralogistiksystem nach einem der Ansprüche 4 bis 6, **dadurch gekennzeichnet, dass** der zweite elektrische Antrieb (9b) des Satellitenfahrzeugs (3) einen Fahrantrieb umfasst, der ausgebildet ist in Zusammenwirkung mit Horizontalschienen (14) des Regals (4) ein autarkes horizontales Fahren des Satellitenfahrzeugs (3) in einer Ebene des Regals (4) zu ermöglichen.

8. Intralogistiksystem nach einem der Ansprüche 4 bis 6, **dadurch gekennzeichnet, dass** das Satellitenfahrzeug (3) ein horizontal ausfahrbares Lastaufnahmemittel (15) aufweist und einen das horizontal ausfahrbare Lastaufnahmemittel (15) betätigenden dritten elektrischen Antrieb (9c) aufweist, der über den zweiten elektrischen Energiespeicher (10b) des Satellitenfahrzeugs (3) oder einem dritten elektrischen Energiespeicher des Satellitenfahrzeugs (3) mit elektrischer Energie versorgt wird.

9. Intralogistiksystem nach einem der Ansprüche 1 bis 8, aufweisend mindestens einen manuellen Kommissionierarbeitsplatz (25) mit mindestens einer Entnahmestelle (26), die ausgebildet ist zum manuellen Entnehmen durch eine Person (19) von Stückgütern (16) aus Behältern, die mittels des Satellitenfahrzeugs (3) und/oder des autonomen Transportfahrzeugs (2) herangefahren sind, wobei der Kommissionierarbeitsplatz (25) einen der Entnahmestelle (26) zugeordneten Fahrbahnabschnitt (27) aufweist, der ausgebildet ist, zum Fahren des Satellitenfahrzeugs (3) und/oder des autonomen Transportfahrzeugs (2) auf dem Fahrbahnabschnitt (27), und wobei der an der Entnahmestelle (26) angeordnete Fahrbahnabschnitt (27) aus einer horizontalen Ebene heraus geneigt verläuft, derart, dass das an die Entnahmestelle (26) herangefahrene Satellitenfahrzeug (3) und/oder autonome Transportfahrzeug (2) aufgrund des geneigten Verlaufs des Fahrbahnabschnitts (27) in Richtung der Person (19) geschwenkt positioniert ist, wenn das Satellitenfahrzeug (3) und/oder das autonome Transportfahrzeug (2) die Entnahmestelle (26) erreicht hat.

10. Intralogistiksystem nach einem der Ansprüche 1 bis 9, **dadurch gekennzeichnet, dass** das Intralogistiksystem (1) mehrere derartige autonome Transportfahrzeuge (2) und mehrere vom autonomen Transportfahrzeug (2) verschiedene, derartige Satellitenfahrzeuge (3) aufweist und einen Vorzonen-Parkplatz (20) umfasst, der ausgebildet ist, zum vorübergehenden Parken der jeweils mit einem Satellitenfahrzeug (3) und mit wenigstens einem darauf transportieren Stückgut (16) ausgestatteten autonomen Transportfahrzeuge (2) in beliebiger Reihenfolge, und zum Ausfahren der autonomen Transportfahrzeuge (2) aus dem Vorzonen-Parkplatz (20) in einer sortierten Reihenfolge.

11. Intralogistiksystem nach einem der Ansprüche 1 bis 10, **dadurch gekennzeichnet, dass** wenigstens eines der autonomen Transportfahrzeuge (2) eingerichtet ist zum Transportieren mehrerer Satellitenfahrzeuge (3) in unterschiedlichen Betriebszeitabschnitten des autonomen Transportfahrzeugs (2) jeweils zeitlich nacheinander.

## Claims

1. Intralogistics system, comprising at least one autonomous transport vehicle (2), at least one satellite vehicle (3) which is different from the autonomous transport vehicle (2), and at least one rack (4) with storage locations in a plurality of levels, the at least one rack (4) having a driving level (21) for the at least one autonomous transport vehicle (2) which is separate from the levels of the storage locations, and having at least one shaft (5) which is designed for vertical travel of the satellite vehicle (3) in the shaft (5), such that the satellite vehicle (3) can automatically change between the levels of the rack (4), the autonomous transport vehicle (2) having a receiving device (6) which is designed to detachably receive the satellite vehicle (3), so that in a received state the satellite vehicle (3) is connected to the autonomous transport vehicle (2) and forms a mobile unit, such that the satellite vehicle (3) is moved along by driving the autonomous transport vehicle (2), and in a released state, the satellite vehicle (3) is separated from the autonomous transport vehicle (2) and can be moved independently of the autonomous transport vehicle (2), **characterized in that** the at least one rack (4) has a maintenance level (17) which is separate from the levels of the storage locations and/or from the driving level (21) for the at least one autonomous transport vehicle (2), which is secured by safety devices (18) in such a way that persons (19) are prevented from leaving the maintenance level (17) into the at least one shaft (5) of the rack (4) and/or into the driving level (21) of the rack (4), and the at least one rack (4) has a service level (23) which is separate from the levels of the storage locations, from the driving level (21) for the at least one autonomous transport vehicle (2) and/or from the maintenance level (17) and which is connected to the driving level (21) via a travel path (24), via which the at least one autonomous transport vehicle (2) can change between the service level (23) and the driving level (21) in a selfpropelled manner, the travel path (24) being formed by a drivable ramp connecting the service level (23) to the driving level (21) of the rack (4).

2. Intralogistics system according to claim 1, **characterized in that** the at least one autonomous transport vehicle (2) has holding means (7a) and the satellite vehicle (3) has counter-holding means (7b) complementary to the holding means (7a) of the autonomous transport vehicle (2), wherein the holding means (7a) and the counter-holding means (7b) in their connected state retain the satellite vehicle (3) on the autonomous transport vehicle (2) and in their released state release the satellite vehicle (3) from the autonomous transport vehicle (2) .

3. Intralogistics system according to claim 1 or 2, **characterized in that** the at least one autonomous transport vehicle (2) has at least one electrical plug connector (8a) and the satellite vehicle (3) has at least one electrical mating plug connector (8b) corresponding to the electrical plug connector (8a) of the autonomous transport vehicle (2), the electrical plug connector (8a) and the electrical mating plug connector (8b) electrically connecting the satellite vehicle (3) to the autonomous transport vehicle (2) in a mutually contacted state, so that electrical energy can be transmitted between the autonomous transport vehicle (2) and the satellite vehicle (3), and in an interrupted state the satellite vehicle (3) being electrically disconnected from the autonomous transport vehicle (2).

4. Intralogistics system according to one of claims 1 to 3, **characterized in that** the autonomous transport vehicle (2) has at least one first electric drive (9a) and a first electric energy store (10a) feeding the first electric drive (9a), and the satellite vehicle (3) has a second electric drive (9b) which is different from the first electric drive (9a) of the autonomous transport vehicle (2) and a second electric energy store (10b) feeding the second electric drive (9b).

5. Intralogistics system according to claim 4, **characterized in that** the second electrical energy store (10b) of the satellite vehicle (3) can be charged by the first electrical energy store (10a) of the autonomous transport vehicle (2).

6. Intralogistics system according to claim 4 or 5, **characterized in that** the second electric drive (9b) of the satellite vehicle (3) comprises a lifting drive (12) which is designed to enable autonomous vertical travel of the satellite vehicle (3) in the at least one shaft (5) of the rack (4) in interaction with lifting travel strips (13) of the rack (4).

7. Intralogistics system according to one of claims 4 to 6, **characterized in that** the second electric drive (9b) of the satellite vehicle (3) comprises a travel drive which is designed to enable autonomous horizontal travel of the satellite vehicle (3) in a plane of the rack (4) in interaction with horizontal rails (14) of the rack (4).

8. Intralogistics system according to one of claims 4 to 6, **characterized in that** the satellite vehicle (3) has a horizontally extendable load-carrying means (15) and has a third electric drive (9c) which actuates the horizontally extendable load-carrying means (15) and which is supplied with electric energy via the second electric energy store (10b) of the satellite vehicle (3) or a third electric energy store of the satellite vehicle (3) .

9. Intralogistics system according to one of claims 1 to 8, having at least one manual picking workstation (25) with at least one removal point (26), which is designed for the manual removal by a person (19) of general cargo (16) from containers which have been driven up to by means of the satellite vehicle (3) and/or the autonomous transport vehicle (2), the picking workstation (25) having a travel path section (27) which is assigned to the removal point (26) and is designed for driving the satellite vehicle (3) and/or the autonomous transport vehicle (2) on the travel path section (27), and wherein the travel path section (27) arranged at the removal point (26) runs inclined out of a horizontal plane in such a way that the satellite vehicle (3) and/or autonomous transport vehicle (2), which has approached the removal point (26), is positioned in a pivoted manner in the direction of the person (19) due to the inclined course of the travel path section (27) when the satellite vehicle (3) and/or the autonomous transport vehicle (2) has reached the removal point (26).

10. Intralogistics system according to one of claims 1 to 9, **characterized in that** the intralogistics system (1) has a plurality of such autonomous transport vehicles (2) and a plurality of such satellite vehicles (3) which are different from the autonomous transport vehicle (2), and comprises a pre-zone parking area (20) which is designed for temporarily parking the autonomous transport vehicles (2), each equipped with a satellite vehicle (3) and with at least one item of general cargo (16) transported thereon, in any desired sequence, and for driving the autonomous transport vehicles (2) out of the pre-zone parking area (20) in a sorted sequence.

11. Intralogistics system according to one of claims 1 to 10, **characterized in that** at least one of the autonomous transport vehicles (2) is set up for transporting a plurality of satellite vehicles (3) in different operating time periods of the autonomous transport vehicle (2), in each case in succession.

## Revendications

1. Système intralogistique, présentant au moins un véhicule de transport autonome (2), au moins un véhicule satellite (3) différent du véhicule de transport autonome (2), et au moins une étagère (4) avec des emplacements de stockage dans plusieurs niveaux, l'au moins une étagère (4) présentant un plan de conduite (21) séparé des plans des emplacements de stockage pour l'au moins un véhicule de transport autonome (2), et avec au moins un puits (5), qui est conçu pour le déplacement vertical du véhicule satellite (3) dans le puits (5), de telle sorte que le véhicule satellite (3) puisse passer automatiquement d'un niveau à l'autre de l'étagère (4), le véhicule de transport autonome (2) présentant un dispositif de réception (6) qui est conçu pour recevoir de manière amovible le véhicule satellite (3), de telle sorte que, dans un état reçu, le véhicule satellite (3) soit relié au véhicule de transport autonome (2) et forme une unité mobile, de telle sorte que le véhicule satellite (3) soit déplacé conjointement par le déplacement du véhicule de transport autonome (2), et dans un état détaché, le véhicule satellite (3) est séparé du véhicule de transport autonome (2) et peut être déplacé de manière autonome indépendamment du véhicule de transport autonome (2), **caractérisé en ce que** l'au moins une étagère (4) présente un plan de maintenance (17) séparé des plans des emplacements de stockage et/ou du plan de conduite (21) pour l'au moins un véhicule de transport autonome (2), qui est protégé par des dispositifs de sécurité (18) de telle sorte que les personnes (19) sont empêchées de quitter le plan de maintenance (17) pour aller dans l'au moins un puits (5) de l'étagère (4) et/ou dans le plan de conduite (21) de l'étagère (4), et l'au moins une étagère (4) présente un plan de service (23) séparé des plans des emplacements de stockage, du plan de conduite (21) pour l'au moins un véhicule de transport autonome (2) et/ou du plan de maintenance (17), qui est relié au plan de conduite (21) par une voie de circulation (24), sur laquelle l'au moins un véhicule de transport autonome (2) peut passer du plan de service (23) au plan de conduite (21) en se déplaçant de lui-même, la voie de circulation (24) étant formée par une rampe carrossable reliant le plan de service (23) au plan de conduite (21) de l'étagère (4).

2. Système intralogistique selon la revendication 1, **caractérisé en ce que** le au moins un véhicule de transport autonome (2) présente des moyens de maintien (7a) et le véhicule satellite (3) présente des moyens de contre-maintien (7b) complémentaires aux moyens de maintien (7a) du véhicule de transport autonome (2), les moyens de maintien (7a) et les moyens de contre-maintien (7b), dans leur état de liaison, retenant le véhicule satellite (3) sur le véhicule de transport autonome (2), et, dans leur état de libération, libérant le véhicule satellite (3) du véhicule de transport autonome (2).

3. Système intralogistique selon la revendication 1 ou 2, **caractérisé en ce que** le au moins un véhicule de transport autonome (2) comprend au moins un connecteur électrique (8a) et le véhicule satellite (3) comprend au moins un connecteur électrique complémentaire (8b) correspondant au connecteur électrique (8a) du véhicule de transport autonome (2), le connecteur électrique (8a) et le connecteur électrique complémentaire (8b) relient électriquement le véhicule satellite (3) au véhicule de transport autonome (2) dans un état de contact mutuel, de sorte que l'énergie électrique peut être transmise entre le véhicule de transport autonome (2) et le véhicule satellite (3), et dans un état interrompu, le véhicule satellite (3) est électriquement séparé du véhicule de transport autonome (2).

4. Système intralogistique selon l'une des revendications 1 à 3, **caractérisé en ce que** le véhicule de transport autonome (2) comporte au moins un premier entraînement électrique (9a) et un premier accumulateur d'énergie électrique (10a) alimentant le premier entraînement électrique (9a), et le véhicule satellite (3) comporte un deuxième entraînement électrique (9b) différent du premier entraînement électrique (9a) du véhicule de transport autonome (2) et un deuxième accumulateur d'énergie électrique (10b) alimentant le deuxième entraînement électrique (9b).

5. Système intralogistique selon la revendication 4, **caractérisé en ce que** le deuxième accumulateur d'énergie électrique (10b) du véhicule satellite (3) peut être rechargé par le premier accumulateur d'énergie électrique (10a) du véhicule de transport autonome (2).

6. Système intralogistique selon la revendication 4 ou 5, **caractérisé en ce que** le deuxième entraînement électrique (9b) du véhicule satellite (3) comprend un entraînement de levage (12) qui est conçu pour permettre, en coopération avec des barres de déplacement de levage (13) de l'étagère (4), un déplacement vertical autonome du véhicule satellite (3) dans l'au moins un puits (5) de l'étagère (4).

7. Système intralogistique selon l'une des revendications 4 à 6, **caractérisé en ce que** le deuxième entraînement électrique (9b) du véhicule satellite (3) comprend un entraînement de déplacement qui est conçu pour permettre, en coopération avec des rails horizontaux (14) de l'étagère (4), un déplacement horizontal autonome du véhicule satellite (3) dans un plan de l'étagère (4).

8. Système intralogistique selon l'une des revendications 4 à 6, **caractérisé en ce que** le véhicule satellite (3) présente un moyen de prise de charge (15) pouvant être déployé horizontalement et présente un troisième entraînement électrique (9c) actionnant le moyen de prise de charge (15) pouvant être déployé horizontalement, qui est alimenté en énergie électrique par le deuxième accumulateur d'énergie électrique (10b) du véhicule satellite (3) ou par un troisième accumulateur d'énergie électrique du véhicule satellite (3).

9. Système intralogistique selon l'une des revendications 1 à 8, présentant au moins un poste de travail manuel de préparation de commandes (25) avec au moins un point de prélèvement (26) qui est conçu pour le prélèvement manuel par une personne (19) de marchandises de détail (16) dans des conteneurs qui ont été approchés au moyen du véhicule satellite (3) et/ou du véhicule de transport autonome (2), le poste de travail de préparation de commandes (25) présentant une section de voie de circulation (27) associée au point de prélèvement (26), qui est conçue, pour le déplacement du véhicule satellite (3) et/ou du véhicule de transport autonome (2) sur la section de voie de circulation (27), et la section de voie de circulation (27) disposée au point de prélèvement (26) s'étendant de manière inclinée à partir d'un plan horizontal, de telle sorte que, que le véhicule satellite (3) et/ou le véhicule de transport autonome (2) approché du point de prélèvement (26) est positionné de manière pivotée en direction de la personne (19) en raison du tracé incliné de la section de voie de circulation (27), lorsque le véhicule satellite (3) et/ou le véhicule de transport autonome (2) a atteint le point de prélèvement (26).

10. Système intralogistique selon l'une des revendications 1 à 9, **caractérisé en ce que** le système intralogistique (1) comporte plusieurs véhicules de transport autonomes (2) de ce type et plusieurs véhicules satellites (3) de ce type, différents du véhicule de transport autonome (2), et comprend un parking de pré-zone (20) qui est configuré pour le stationnement temporaire, dans un ordre quelconque, des véhicules de transport autonomes (2) équipés chacun d'un véhicule satellite (3) et d'au moins une marchandise de détail (16) transportée sur celui-ci, et pour la sortie des véhicules de transport autonomes (2) de la place de stationnement de parking de pré-zone (20) dans un ordre trié.

11. Système intralogistique selon l'une des revendications 1 à 10, **caractérisé en ce qu'**au moins l'un des véhicules de transport autonomes (2) est agencé pour transporter plusieurs véhicules satellites (3) dans différentes périodes de fonctionnement du véhicule de transport autonome (2), respectivement l'un après l'autre dans le temps.
